Europäisches Patentamt

European Patent Office

Office européen des brevets

(19)

(11) Veröffentlichungsnummer: **0 221 462**
**B1**

(12) # EUROPÄISCHE PATENTSCHRIFT

(45) Veröffentlichungstag der Patentschrift:
27.12.89

(51) Int. Cl.⁴: **F 16 H 37/02,** F 16 H 11/06

(21) Anmeldenummer: **86114746.0**

(22) Anmeldetag: **23.10.86**

(54) Stufenlos regelbares Getriebeaggregat für Kraftfahrzeuge.

(30) Priorität: **02.11.85 DE 3538884**

(43) Veröffentlichungstag der Anmeldung:
**13.05.87 Patentblatt 87/20**

(45) Bekanntmachung des Hinweises auf die Patenterteilung:
**27.12.89 Patentblatt 89/52**

(84) Benannte Vertragsstaaten:
**BE DE FR GB IT SE**

(56) Entgegenhaltungen:
DE-A-3 241 789
DE-C-3 028 490

(73) Patentinhaber: **FORD- WERKE AKTIENGESELLSCHAFT, Werk Köln- Niehl Henry- Ford- Strasse Postfach 60 40 02, D-5000 Köln 60 (DE)**
(84) Benannte Vertragsstaaten: **BE DE IT SE**

(73) Patentinhaber: **FORD MOTOR COMPANY LIMITED, Eagle Way, Brentwood Essex CM13 3BW (GB)**
(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex (FR)**
(84) Benannte Vertragsstaaten: **FR**

(72) Erfinder: **Svab, Eugen, Masurenstrasse 17, D-5000 Köln 71 (DE)**

(74) Vertreter: **Ritzkowsky, Harald, Dipl.- Ing., Ford- Werke Aktiengesellschaft Patentabteilung NH/DRP Henry- Ford- Strasse, D-5000 Köln 60 (DE)**

### Beschreibung

Die Erfindung bezieht sich auf ein stufenlos regelbares Getriebeaggregat für Kraftfahrzeuge, der im Oberbegriff des Patentanspruchs erläuterten Art.

Aus der DE-C-3 028 490 ist ein stufenlos einstellbares Kegelscheibengetriebe bekannt, bei dem ein Scheibenteil der Primärscheibe durch den Stellkolben einer hydraulischen Stelleinrichtung axial verstellbar ist, wobei der Stellkolben der Stelleinrichtung axial feststehend mit der Antriebswelle des stufenlos einstellbaren Kegelscheibengetriebes verbunden und von dem an dem axial verstellbaren Scheibenteil befestigten Stellzylinder umgeben ist.

Bei diesem bekannten stufenlos einstellbaren Kegelscheibengetriebe ist zur lastabhängigen Erzeugung der Anpreßkräfte an der Primärwelle ein Fühler für das dort übertragene Drehmoment angeordnet.

Dieser Drehmomentfühler besteht aus einer auf der Primärwelle axial festgelegten, jedoch zu dieser relativ verdrehbaren Antriebsglocke die über eine Verzahnung mit einem Drehring in Verbindung steht, dessen Vorderseite einen Ringkolben bildet, der in einem Ringzylinder in der festen Kegelscheibe verdreh- und axial verschiebbar aufgenommen ist und dessen Rückseite eine V-förmige Kurvenbahn bildet, der unter Zwischenschaltung von Wälzkörpern ein gleichfalls eine V-förmige Kurvenbahn aufweisender Stützring gegenüberliegt, der mit der Antriebswelle dreh- und axial fest verbunden ist. Diesem Drehmomentfühler wird im Bereich der Zylinder-Kolben-Anordnung über einen Kanal Druckmittel zugeführt, das normalerweise über einen anderen Kanal abfließen kann. Der andere Kanal ist hierbei so angeordnet, daß er von einer Kante der als Ringkolben ausgebildeten Vorderseite des Drehringes übergriffen und kontrolliert wird, sobald sich dieser infolge einer Drehmomentänderung relativ zum Stützring verdreht und hierbei durch die Wälzkörper zwischen den V-förmigen Kurvenbahnen axial verlagert wird.

Hierdurch wird bei einer Drehmomenterhöhung kurzfristig der Ablaufkanalquerschnitt stark verringert, wodurch ein dem Drehmoment proportionaler Steuerdruck erzeugt wird, der auf das Hauptdruck-Regulierventil einwirkt und eine entsprechende Erhöhung des Systemdrucks bewirkt.

Aus der DE-A-3 241 789 ist ein gattungsgemäßes stufenlos regelbares Getriebeaggregat für Kraftfahrzeuge bekannt, bei dem zwei hydraulisch betätigbare Reibscheibenkupplungen zum Schalten eines Vorwärts- bzw. eines Rückwärtsganges mittels eines Umschalt-Planetenradsatz vorgesehen sind, dessen Planetenradträger durch die Vorwärtsgangkupplung mit dem Sonnenrad kuppelbar ist, das mit der Primärwelle eines nachgeschalteten stufenlos regelbaren Umschlingungsgetriebes verbunden ist. Bei diesem stufenlos regelbaren Umschlingungsgetriebe ist wieder ein axial verstellbarer Kegelscheibenteil der Primärwelle auf einem einen axial feststehenden Kegelscheibenteil aufweisenden Primärwellenteil durch den Stellkolben einer hydraulischen Stelleinrichtung axial verstellbar, wobei der Stellkolben der Stelleinrichtung axial feststehend mit dem den feststehenden Kegelscheibenteil aufweisenden Primärwellenteil des stufenlos regelbaren Umschlingungsgetriebes verbunden ist und von dem an dem axial verstellbaren Scheibenteil befestigten Stellzylinder umgeben ist.

Die Aufgabe der Erfindung ist es, ein stufenlos regelbares Getriebeaggregat für Kraftfahrzeug der im Oberbegriff des Patentanspruchs erläuterten Art derart zu verbessern, daß ein an sich bekannter Drehmomentfühler der eingangs erläuterten Art bei den beengten Raumverhältnissen mit einem Minimum an Veränderungen der erforderlichen Hauptbauteile angeordnet und entsprechend mit Druckmittel versorgt werden kann.

Gemäß der Erfindung wird diese Aufgabe gelöst, indem bei einem stufenlos regelbaren Getriebeaggregat für Kraftfahrzeuge der im Oberbegriff des Patentanspruchs erläuterten Art die im Kennzeichenteil des Patentanspruchs aufgezeigten Maßnahmen vorgesehen werden.

Dadurch, daß der axial feststehende Stellkolben einen die Führungsnabe des axial verstellbaren Scheibenteiles übergreifenden, mit dem axial feststehenden Kegelscheibenteil axial- und drehfest und mit der Führungsnabe über eine Keilverzahnung axial beweglich verbundenen Hülsenteil aufweist, auf dem das Sonnenrad des Umschalt-Planetenradsatzes axial fest, jedoch zum axial feststehenden Kegelscheibenteil verdrehbar angeordnet ist und daß das Sonnenrad eine Antriebsglocke einerseits für die Vorwärtsgangkupplung und andererseits für den Drehring bildet, der an seiner Vorderseite einen Ringkolben bildend in einem Ringzylinder im axial feststehenden Stellkolben aufgenommen ist und dessen Rückseite eine erste V-förmige Kurvenbahn aufweist, die über zwischengeschaltete Wälzkörper mit einem gleichfalls eine V-förmige Anpreßkurve aufweisenden Stützring zusammenwirkt, der axial- und drehfest auf dem mit der Antriebswelle verbundenen Hülsenteil angeordnet ist und in der sich durch die Primärwelle erstreckenden Pumpenantriebswelle ein Trennrohr eingesetzt ist, das mit der Pumpenantriebswelle einen Druckmittelkanal bildet, von dem über radiale Bohrungen und über Lücken in der Keilverzahnung sowie einen Kanal der Druckraum der Zylinder-Kolben-Anordnung des Drehmomentfühlers mit Druckmittel versorgt wird, wird im Wesentlichen nur durch Umgestaltung der Bauteile, die den feststehenden Stellkolben und das Sonnenrad mit der Antriebsglocke bilden und die Einfügung eines Trennrohres in die Pumpenantriebswelle, die Anordnung des erwünschten Drehmomentfühlers und dessen Druckmittelversorgung ermöglicht, ohne daß hierdurch Gehäuseabmessungen eines gegebenen Getriebeaggregates verändert werden müßten.

Die Erfindung wird anhand eines in den Zeichnungen gezeigten Ausführungsbeispiels näher erläutert.

Es zeigt:

Fig. 1 ein stufenlos regelbares Getriebeaggregat für Kraftfahrzeuge, insbesondere mit Frontantrieb, wie es der DE-A-3 241 789 entspricht;

Fig. 2 zeigt eine vergrößerte Darstellung des im Kreis II in Fig. 1 herausgehobenen Bereiches mit dem erfindungsgemäß angeordneten Drehmomentfühler.

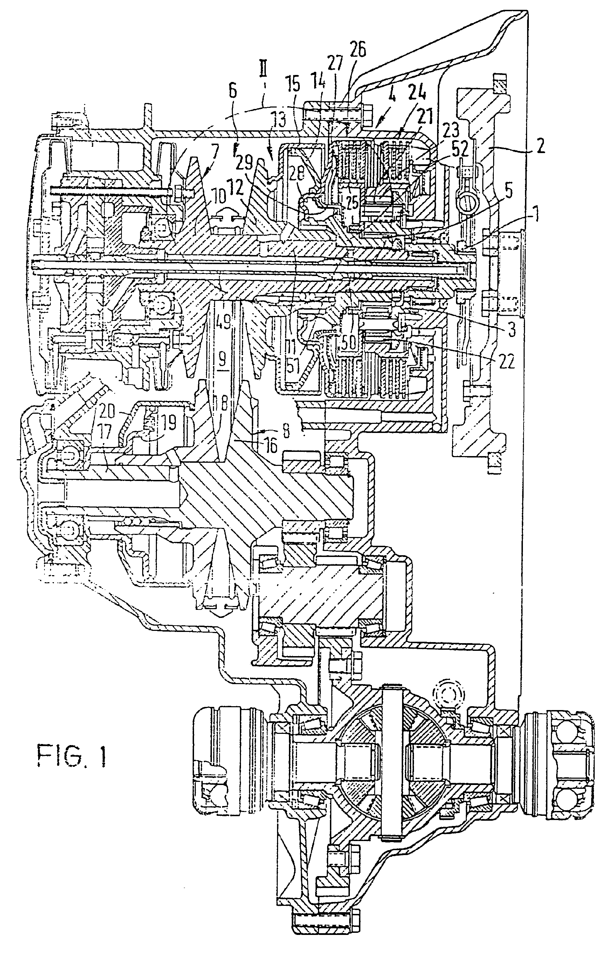

Aus Fig. 1 ist das mit seinen axialen und radialen Abmessungen sehr kompakt gehaltene stufenlos regelbare Getriebeaggregat für Kraftfahrzeuge insbesondere mit Frontantrieb zu ersehen. Eine Eingangswelle 1 ist für eine direkte Verbindung mit dem Antriebsmotor ausgebildet, was über eine an sich bekannte Dämpfungsscheibenanordnung 2 erfolgen kann.

Die Eingangswelle 1 ist treibend mit dem Planetenradträger 3 eines Umschalt-Planetenradsatzes 4 verbunden, dessen Sonnenrad 5 das Eingangsglied für das nachgeschaltete stufenlos regelbare Umschlingungsgetriebe 6 bildet, das im Wesentlichen aus einer Primärwelle 7, einer Sekundärweile 8 und einem endlosen Zugglied 9 besteht.

Die Primärwelle 7 besteht hierbei aus einem einen feststehenden Kegelscheibenteil 10 aufweisenden Primärwellenteil 11, der als Hohlwelle ausgebildet ist, auf dem ein axial verstellbarer Kegelscheibenteil 12 verschiebbar angeordnet ist, der über eine hydraulische Stelleinrichtung 13, die aus einem feststehenden Stellkolben 14 und einem beweglichen Stellzylinder 15 besteht, verstellbar ist.

In ähnlicher Weise besteht die Sekundärwelle 8 aus einem einen axial feststehenden Kegelscheibenteil 16 aufweisenden Sekundärwellenteil 17, der an einer Seite als Hohlschaft ausgebildet ist, auf dem eine axial verstellbare Kegelscheibe 18 angeordnet ist, die über eine hydraulische Stelleinrichtung gebildet aus einem feststehenden Kolben 19 und einem beweglichen Zylinder 20 verschiebbar ist. Die Sekundärwelle 8 bildet die Ausgangswelle des Umschlingungsgetriebes 6.

Das das Eingangsglied des Umschlingungsgetriebes 6 bildende Sonnenrad 5 ist drehfest mit dem Primärwellenteil 11 des Umschlingungsgetriebes 6 verbunden. Der Umschalt-Planetenradsatz 4 weist in seinem Planetenradträger 3 zwei Sätze von Planetenrädern 21 und 22 auf, von denen der eine Satz 21 mit dem Sonnenrad 5 in Eingriff steht, beide Sätze untereinander in Eingriff stehen und der zweite Satz 22 mit dem Ringrad 23 in Eingriff steht. Das Ringrad 23 trägt an seinem Außenumfang Kupplungslamellen für eine Rückwärtsgangkupplung 24, mittels der das Ringrad am Getriebegehäuse festgelegt werden kann, wodurch die Drehrichtung des Sonnenrades 5 gegenüber der Drehrichtung der Eingangswelle 1 umgekehrt werden kann.

Der Planetenradträger 3 ist an seiner einen Seite mit einer Kupplungstrommel 25 verbunden, an deren Außenumfang Lamellen einer Vorwärtsgangkupplung 26 angreifen, deren gegenüberliegende Lamellen an einer Antriebsglocke 27 angeordnet sind, die unmittelbar mit dem Sonnenrad 5 drehfest verbunden ist, wobei die Antriebsglocke 27 einen Ringzylinder 28 für einen entsprechenden Ringkolben 29 zur Beaufschlagung der Vorwärtsgangkupplung 26 bildet.

Die bis hierher erfolgte Beschreibung der Fig. 1 entspricht einem Getriebeaggregat der aus der DE-A-3 241 789 bekannten Art, bei dem bei Verwendung eines Schubgliederbandes ein Drehmomentfühler entbehrlich ist.

Im Zusammenhang mit der vergrößerten Darstellung des Bereiches 11 der Fig. 1 wird nunmehr die erfindungsgemäße Anordnung eines erwünschten Drehmomentfühlers im Bereich innerhalb des feststehenden Stellkolbens erläutert.

Zur Erleichterung des Verständnisses wurden Bauteile, die mit solchen in der Figur 1 übereinstimmen, mit den gleichen, nur mit einem Strichindex versehenen Bezugzeichen versehen und nur wesentlich abweichende Bauteile wurden mit neuen Bezugzeichen gekennzeichnet.

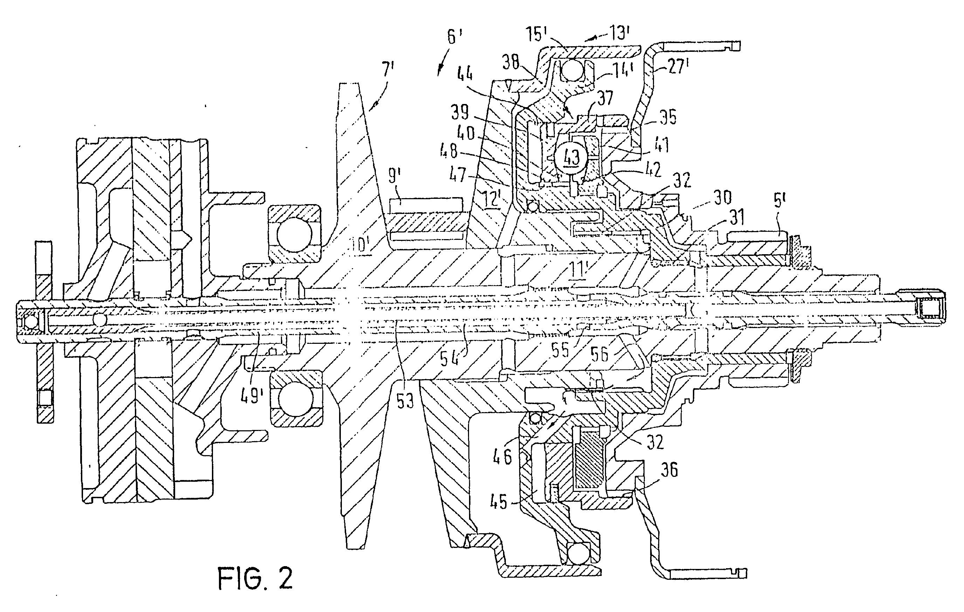

Wie aus Fig. 2 zu ersehen ist, ist nur die Betrachtung des Bereichs der Primärwelle 7' erforderlich. Die Primärwelle 7' besteht im wesentlichen aus einem eine feste Kegelscheibe 10' aufweisenden axial feststehenden Primärwellenteil 11', der die Antriebswelle des Umschlingungsgetriebes 6' bildet. Auf dem axial feststehenden Primärwellenteil 11' ist ein axial beweglicher Kegelscheibenteil 12' angeordnet, der über eine hydraulische Stelleinrichtung 13', die aus einem feststehenden Stellkolben 14' und einem axial verlagerbaren Stellzylinder 15' besteht, verstellbar ist.

Im Gegensatz zur Ausführung nach Fig. 1 ist der feststehende Stellkolben 14' nicht unmittelbar mit dem Sonnenrad fest verbunden sondern er weist nun einen mehrfach abgesetzten Hülsenteil 30 auf, der bei 31 über eine Kerbverzahnung 32 mit der Antriebswelle 11' drehfest verbunden ist. An einem stufenförmigen Absatz ist der Hülsenteil 30 über eine Keilverzahnung 32 drehfest jedoch axial beweglich mit dem beweglichen Kegelscheibenteil 12' verbunden.

Das Sonnenrad 5' ist hierbei auf dem Hülsenteil 30 axial fest jedoch relativ zu diesem verdrehbar gelagert angeordnet. Das Sonnenrad 5' ist wieder mit einer Antriebsglocke 27' verbunden, wobei sie nicht nur eine Antriebsverbindung zur Vorwärtsgangkupplung herstellt sondern an einer Ringschulter eine Verzahnung 35 aufweist.

In die Verzahnung 35 an der Ringschulter greift eine Verzahnung 36 an einem Ringvorsprung 37 ein, der an der Rückseite eines Drehringes 38 ausgebildet ist. Der Drehring 38 bildet an seiner Vorderseite einen Ringkolben 39 und weist auf seiner Rückseite eine sich in Umfangsrichtung erstreckende V-förmige Kurvenbahn 40 auf, der ein Stützring 41 gegenüberliegt, welcher gleichfalls eine sich in Umfangsrichtung erstreckende V-förmige Kurvenbahn 42 aufweist. Der Stützring 41 ist hierbei sowohl axial- als auch drehfest mit dem Hülsenteil 30 des feststehenden Stellkolbens 14' verbunden. Zwischen den beiden Kurvenbahnen 40 und 42 sind Wälzkörper 43 angeordnet.

Der Drehring 38 ist mit seiner einen Ringkolben 39 bildenden Vorderseite in einem Ringzylinder 44 im feststehenden Stellkolben 14' angeordnet und bildet einen Druckmittelraum 45.

Der Druckmittelraum 45 wird über einen Kanal 46 mit Druckmittel beaufschlagt, das normalerweise über einen weiteren Kanal 47 abfließen kann. Der weitere Kanal 47 ist hierbei so angeordnet, daß eine Kante 48 des Ringkolbens 39 als Steuerkante den weiteren Kanal 47 übergreift, sobald der Drehring 38 durch eine Drehmomentänderung sich gegenüber dem Stützring 41 verdreht und durch die auf den Kurvenbahnen 40 und 41 sich abwälzenden Wälzkörpern 43 axial verlagert wird.

Bei dem in Figur 1 gezeigten Getriebeaggregat erstreckt sich durch die Primärwelle 7, insbesondere durch deren als Hohlwelle ausgebildeten Primärwellenteil 11 eine hohle Pumpenantriebswelle 49, die einerseits für den Antrieb einer Druckmittelpumpe und andererseits für die Zufuhr des Druckmittels zur Vorwärtsgangkupplung 26 sorgt. Das Druckmittel kann hierbei aus der hohlen Pumpenantriebswelle 49 über radiale Bohrungen 50, radiale Bohrungen 51 im Primärwellenteil 11 sowie einen Kanal 52 in einen Druckraum gelangen, gebildet aus dem Ringzylinder 28 und dem Ringkolben 29, so daß die Vorwärtsgangkupplung 26 beaufschlagt wird.

Bei dem in Figur 2 gezeigten Getriebeaggregat ist eine zusätzliche Druckmittelversorgung für den Drehmomentfühler erforderlich, die durch ein in der Pumpenantriebswelle 49' angeordnetes Trennrohr 53 realisiert wird, wodurch ein Druckmittelkanal 54 gebildet wird, der über radiale Bohrungen 55 in der Pumpenantriebswelle 49' und radiale Bohrungen 56 in dem Primärwellenteil 11' mit einem ersten Raum innerhalb des Hülsenteiles 30 in Verbindung steht, von wo es über Lücken in der Keilverzahnung 32 in einen weiteren Raum innerhalb des Hülsenteiles 30 übertreten kann, von wo es über einen Kanal 46 in den Druckmittelraum 45 des Drehmomentfühlers gelangt.

Auf diese Weise kann der erforderliche Drehmomentfühler innerhalb des vorhandenen Getriebebauraumes angeordnet und seine Versorgung mit Druckmittel sichergestellt werden.

## Patentanspruch

Stufenlos regelbares Getriebeaggregat für Kraftfahrzeuge, mit zwei hydraulisch betätigbaren Reibscheibenkupplungen zum Schalten eines Vorwärtsganges bzw. eines Rückwärtsganges mittels eines Umschalt-Planetenradsatzes (4'), dessen Planetenradträger durch eine Vorwärtsgangkupplung mit dem Sonnenrad (5') kuppelbar ist, das mit einer in Axialrichtung einen feststehenden sowie einen verstellbaren Kegelscheibenteil tragenden Primärwelle eines stufenlos regelbaren Umschlingungsgetriebes verbunden ist, bei dem der verstellbare Kegelscheibenteil (12') durch eine hydraulische Stelleinrichtung verstellbar ist, wobei ein Stellkolben (14') der Stelleinrichtung axial feststehend mit der Primärwelle (7') verbunden und von einem an dem verstellbaren Kegelscheibenteil befestigten Stellzylinder (15') umgeben ist, *dadurch gekennzeichnet, daß* der Stellkolben (14') einen eine Führungsnabe des verstellbaren Kegelscheibenteiles (12') übergreifenden Hülsenteil (30) aufweist, welcher mit einem Primärwellenteil (11') der Primärwelle (7') über eine Kerbverzahnung (31) axial- und drehfest und welcher mit dem verstellbaren Kegelscheibenteil (12') über eine Keilverzahnung (32) axial beweglich verbunden ist, daß das Sonnenrad (5') axial fest jedoch drehbar auf dem Hülsenteil (30) angeordnet ist, daß das Sonnenrad (5') einerseits mit einer Antriebsglocke (27') für die Vorwärtsgangkupplung (26') und andererseits mit einem Drehring (38) für einen Drehmomentfühler verbunden ist, wobei der Drehring (38) an seiner Vorderseite einen Ringkolben (39) bildet, der in einem Ringzylinder (44) im Stellkolben (14') aufgenommen ist und der an seiner Rückseite eine V-förmige Kurvenbahn (40) aufweist, die über zwischengeschaltete Wälzkörper (43) mit einem gleichfalls eine V-förmige Kurvenbahn (42) aufweisenden Stützring (41) zusammenwirkt, der über eine Kerbverzahnung axial- und drehfest auf dem Hülsenteil (30) angeordnet ist und daß in einer sich durch die Primärwelle (7') erstreckenden Pumpenantriebswelle (49') ein Trennrohr (53) eingesetzt ist, welches mit dieser einen Druckmittelkanal (54) bildet, von dem über Radialbohrungen (55 und 56), über Lücken in der Keilverzahnung (32) sowie über einen Kanal (46) im Stellkolben (14') ein Druckraum der Zylinder-Kolben-Anordnung (39, 44) des Drehmomentfühlers mit Druckmittel versorgt wird.

## Claim

A continuously variable transmission unit for motor vehicles, having two hydraulically controllable friction disc clutches for engaging a forward gear or a reverse gear respectively by means of a set (4') of gear-shifting planetary gears, the planetary gear carrier of which can be coupled by way of the forward gear clutch to the sun gear (5') which is connected to a primary shaft of a continuously variable belt-drive transmission, the primary shaft carrying in the axial direction a stationary and a displaceable cone pulley part, in which the displaceable cone pulley part (12') is displaceable by an hydraulic displacement device, a piston (14') of the displacement device being connected in an axially rigid manner to the primary shaft (7') and being surrounded by a displacement cylinder (15') secured to the displaceable cone pulley part, characterized in that the displacement piston (14') comprises a sleeve part (30), which engages over a guide hub of the cone pulley part (12') and is connected axially and rotationally rigidly to a part (11') of the primary shaft (7') by way of a serration and which is connected axially displaceably to the displaceable cone pulley part (12') by way of a splined connexion (32), the sun gear (5') is disposed axially rigidly but rotatably on the sleeve part (30), the sun gear (5') is connected on the one hand to a driving collar (27') for the forward gear clutch (26') and on the other hand to a rotary ring (38) for a torque sensor, the rotary ring (38) forming on its front side an annular piston (39), which is received in an annular cylinder (44) in the displacement piston (14') and which on its rear side comprises a V-shaped curved track (40) which cooperates by way of interposed rolling elements (43) with a support ring (41) which likewise comprises a V-shaped curved track (42) and which is disposed axially and rotationally rigidly on the sleeve part (30) by way of a serration, and in a pump driving shaft (49') extending through the primary shaft (7') is inserted a separation pipe (53) which with the pump driving shaft (49') forms a pressure fluid duct (54), from which a pressure space of the cylinder-piston arrangement (39, 44) of the torque sensor is supplied with pressure fluid by way of radial bores (55 and 56) and by way of gaps in the splined connexion (32) as well as by way of a duct (46) in the displacement piston (14').

**Revendications**

Groupe de transmission réglable en continu pour véhicules automobiles, comportant deux accouplements à disques de friction, à commande hydraulique, pour la manoeuvre d'une marche avant ou d'une marche arrière, à l'aide d'un train planétaire de commutation (4') dont le porte-satellites peut être accouplé, par un accouplement de marche avant, à la roue planétaire (5'), qui est reliée à un arbre primaire portant axialement une partie de disque conique fixe ainsi qu'une partie de disque conique réglable, d'une transmission à courroie sans fin réglable en continu, dans laquelle la partie de disque conique (12') peut être réglée par l'intermédiaire d'un dispositif de réglage hydraulique, un piston de réglage (14') du dispositif de réglage étant relié fixe axialement à l'arbre primaire (7'), et étant entouré par un cylindre de réglage (15') fixé sur la partie de disque conique réglable, caractérisé en ce que le piston de réglage (14') comporte une partie de fourreau (30) passant sur un moyeu de guidage de la partie de disque conique (12') réglable, qui est reliée fixe axialement et en rotation, à une partie d'arbre primaire (11') de l'arbre primaire (7'), par une denture à cannelures (31), et qui est reliée mobile axialement à la partie de disque conique réglable, par une denture à cannelures (32), en ce que la roue planétaire (5') est montée sur la partie de fourreau (30), fixe axialement mais tournante, en ce que la roue planétaire (5') est reliée, d'une part, à une cloche d'entraînement (27') pour l'accouplement de marche avant (26') et, d'autre part, à un anneau tournant (38) pour un détecteur de couple de rotation, l'anneau tournant (38) formant sur sa face avant un piston annulaire (39) qui est logé dans un cylindre annulaire (44) dans le piston de réglage (14'), et qui comporte, sur sa face arrière, une piste incurvée en V (40), qui coopère, par des corps de roulement (43) interposés, avec un anneau d'appui (41) présentant aussi une piste incurvée en V (42), cet anneau d'appui étant disposé fixe axialement et en rotation sur la partie de fourreau (30), par l'intermédiaire d'une denture à cannelures, et en ce que dans un arbre d'entraînement de pompe (49'), traversant l'arbre primaire (7'), est placé un tube de séparation (53) qui forme avec celui-ci, un canal de fluide sous pression (54), à partir duquel un compartiment de pression du dispositif à cylindre et piston (39, 44) du détecteur de couple de rotation, est alimenté en fluide sous pression, par des perçages radiaux (55 et 56), par des fentes pratiquées dans la denture à cannelures (32), ainsi que par un canal (46) ménagé dans le piston de réglage (14').

FIG. 1

FIG. 2